# EUROPEAN PATENT APPLICATION

(11) **EP 3 253 120 A1**
(43) Date of publication of application: **06.12.2017**
(21) Application number: 16190782.9
(22) Date of filing: 27.09.2016
(51) Int. Cl.: H04W 36/08, H04W 36/30, H04W 84/12

(54) **METHOD FOR GUIDING USER DEVICE TO ESTABLISH CONNECTION AMONG WLAN ACCESS POINTS AND SYSTEM THEREOF**

(30) Priority: 03.06.2016 TW 105117573
(71) Applicant: Arcadyan Technology Corporation, Hsinchu City 30071 (TW)
(72) Inventor: LEE, Chih-Fang, 717 Tainan City (TW); CHEN, Chun-Ping, 30071 Hsinchu City (TW)
(74) Representative: Viering, Jentschura & Partner mbB Patent- und Rechtsanwälte

(57) **Abstract**

The disclosure is related to a method for guiding a user device (10) to establish connection among WLAN access points (AP1, AP2, AP3), and a system thereof. The method is adapted to a WLAN having at least two APs. A master AP is defined. The master AP obtains every AP's signal status of a connection with a user device (10), and its network status. The master AP performs a comprehensive judgment of a communication quality for every AP. Thus, the master AP can determine if the user device (10)'s connection is to be switched to the next AP from the original connection according to assessment of the communication quality. The system allows the network system to perform a hand-off process for the user device (10) in a shortest time once a next AP is found. The problem to be solved by the system is to avoid poor connection quality or disconnection when the user device (10) moves within the WLAN.

## Description

### BACKGROUND OF THE INVENTION

### 1. Field of the Invention

The present invention is generally related to a method and a system for establishing connection for a user device to an access point; in particular to a method for guiding the user device to conduct a hand off connection among access points in a local area network, and a system for implementing this method.

### 2. Description of Related Art

At least one wireless access point can generally act as a station within a local area network, and this wireless access point is usually a router that is able to share its network to others. The access point may be installed with a Dynamic Host Configuration Protocol (DHCP) server that allows a user device to establish a connection to an external device via this wireless access point.

The device located in a wireless local area network (WLAN) usually supports IEEE802.11 communication protocol that allows multiple wireless access points in the local area network to conduct the hand-off process. The hand-off process allows the user device to switch connections between multiple wireless access points. However, the conventional technology still lacks a suitable method to apply the hand-off process to the wireless local area network since the antenna and the related APs within the WLAN are different from the hand-off scheme applied to the mobile communication network. The conventional user device is restricted to establish only one connection to the WLAN AP at one time. Therefore, even though the hand-off process can be found in the conventional arts, the conventional method takes a longer time to operate the hand-off process. For example, the hand-off process adapted to WLAN is asked to interrupt an original connection, and searching for a next connection for a next AP. The kinds of applications relating to the hand-off process fail to provide a unified way to conduct the hand-off process because the conventional technology lacks an efficient hand-off approach.

### SUMMARY OF THE INVENTION

The disclosure in accordance with the present invention is related to a method and a system for guiding a user device to establish connection with an access point in a wireless local area network. The system renders an approach that allows the user device to roam among access points in a wireless local area network. A hand-off mechanism is introduced in the wireless network system. The system is able to determine a timing to switch a connection to one of the access points based on analysis of communication quality of the user device and the access point, or communication quality of network. The system therefore allows the user device to move around the local area network without service interruption.

In one of the embodiments of the present invention, the method for guiding the user device to establish connection among the access points renders an approach allowing the user device to process a hand-off between the at least two access points. One of the access points in the local area network acts as a master access point. The user device can be connected with one of the access points, e.g. a first access point. In the method, the master access point in the local area network can continuously acquire signal status between the user device and every access point. The signal status is such as received signal strength indication (RSSI) and bit error rate that can be used to assess the connection quality. The master access point can also acquire network status for every access point. The network status is such as the bandwidth in respect to the access point and can be used to evaluate the quality of the network connection. The master access point conducts a comprehensive judgment of a communication quality according to the aforementioned signal status between every access point and the user device and/or network status for every access point. The communication quality can then be used to assess if the connection of the user device is to be switched to another access point.

In one further embodiment, the comprehensive judgment performed by the master access point is to judge the signal status between every access point and the user device, and in combination with the network status for every access point with a weight proportion there-between, so as to assess if it is necessary to switch the user device to another connection. In the judgment, when the communication quality is lower than a threshold, the master access point selects another access point, e.g. a second access point, to take over the connection to the user device. This second access point establishes a new connection to the user device. In the meantime, the master access point instructs the first access point to interrupt the connection to the user device, and also instructs the access points other than the second access point to reject any connection request made by the user device.

In one embodiment of the system in accordance with the present invention, the system is adapted to a master access point in a wireless local area network. The circuits of the master access point are such as a control unit and the other circuit units connected with the control unit, including a wireless network unit used to establish connection to the user device, an access-point management unit used to manage access points in the wireless local area network, a memory unit used to store the data collected by the access-point management unit, a WAN network unit used to link to an external network, a connection management unit used to decide the connection status for the user device, and a signal-strength computing unit used to compute the signal strength between the user device and every access point. It is noted that the access-point management unit can be used to acquire the signal status and/or the network status; and the master access conducts a comprehensive judgment of communication quality based on the signal status and/or the network status analyzed by a connection-quality analysis unit.

### BRIEF DESCRIPTION OF THE DRAWINGS

Fig. 1 schematically shows a circumstance of the system for guiding the user device to establish connection to an access point in accordance with the present invention;
Fig. 2 shows another circumstance embodying the method for guiding user device to establish connection to the access point according to the present invention;
Fig. 3 shows a schematic diagram of circuit blocks describing the system for guiding the user device to establish the connection in accordance with the present invention;
Fig. 4 shows a flow chart describing the method for guiding the user device to establish connection with the access point according to one embodiment in accordance with the present invention;
Fig. 5 shows a flow chart describing the method according to another one embodiment in accordance with the present invention;
Fig. 6 shows a flow chart describing the process of setting up a master access point in one embodiment.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

The disclosure, according to one of the embodiments of the present invention, is directed to a method and a system for guiding a user device to establish a connection with an access point in a local area network. Especially, the present invention provides a mechanism that allows the connection for a user device to be switched among multiple wireless access points when the user device roams within the local area network. The wireless access point is such as a network hot spot or station in the local area network. A signaling hand-off process can be performed among the plurality of wireless network stations. The hand-off process allows the user device to move among the access points in the local area network without a long interruption of signaling and does not need manual switching among the stations.

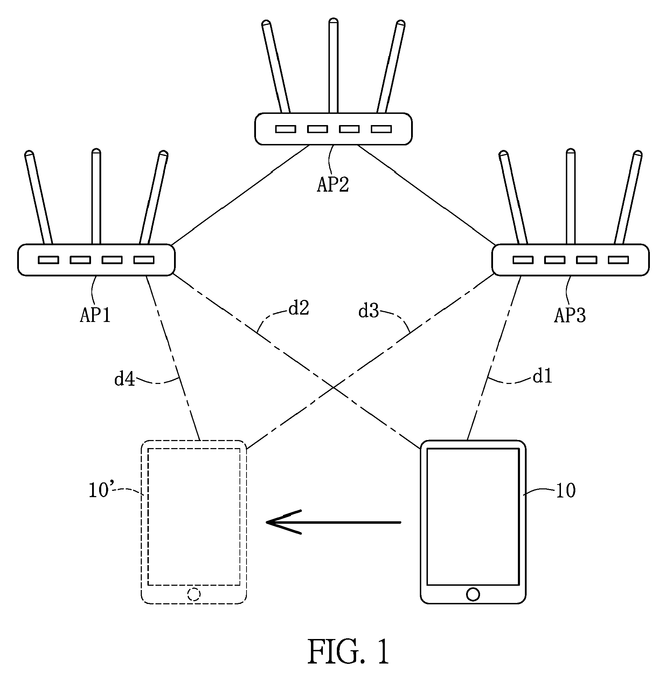

Reference is made to Fig. 1 showing a circumstance that a system is provided for guiding the user device to establish a connection among access points in a LAN. In this exemplary example, a plurality of wireless access points are disposed in a local area network, and a user device 10 is connected with one of the access points for further wireless signaling, or to an external network.

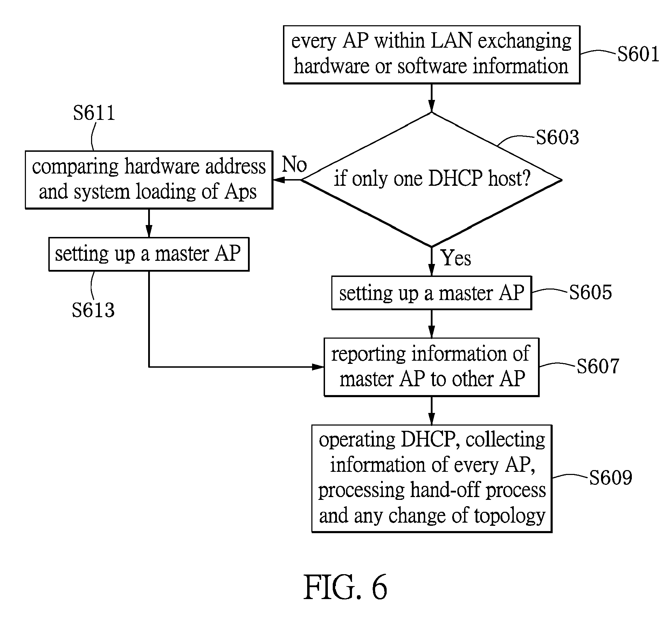

Further, a first access point AP1, a second access point AP2 and a third access point AP3 are disposed at different positions in the area. The access points are in charge of responding to connection request to the access point within a signaling coverage. For implementing the method, there is a master access point for management among the access points in the local area network. The master access point can be specified manually, or using a specific algorithm. The master access point is used to manage topology logics, and the connectivity for every access point to the user device in the local area network. The master access point also manages the process of hand-off. The configuration of the master access point can be referred to in Fig. 6.

Fig. 1 schematically shows a user device 10. In the beginning of operation, a wireless network module of the user device 10 broadcasts connection request packets under a communication protocol. One or more access points within a signaling coverage receive the request packets. The network packets are employed to compute signal strength such as a Received Signal Strength Indicator, hereinafter `RSSI', and even the signal status such as bit error rate.

In the diagram, the access point estimates a distance to the user device 10 while the RSSI is computed. In this exemplary example, a distance d1 is obtained from the user device 10 to the third access point AP3; another distance d2 is obtained from the user device 10 to the first access point AP1. These distances are used to assess signaling quality between user device 10 and every access point. The signaling quality is one of the factors to determine if it is to be switched to another connection. Furthermore, in addition to the signal status being a factor for the master access point to consider whether the next access point takes over the connection, some other network information may also be used as a reference to make the decision. For example, distance may be another factor for the master access point to judge if the connection is switched to another. For achieving an efficient hand-off process, the user device 10 may keep a signaling relationship with another access point while the user device 10 is still originally connected with a third access point AP3.

When the user device 10 is moved to another location, e.g. the location of the user device 10', the access points which are able to receive wireless network packets from the user device 10 continuously compute a signal strength, bit error rate, and connectivity quality. Further, the signal strength can reflect a distance from the user device 10 to its connected access point. For example, when the user device 10 is moved to the next location, e.g. the location of user device 10', the distances from the third access point AP3 and the first access point AP1 become d3 and d4 respectively. The changes of the distances from the access points indicate the changes of signal strengths. The master access point can accordingly judge if the original connection should be switched to the next one. In the current example, the original connection from the user device 10 to the third access point AP3 is changed to a new connection to the first access point AP1 when the user device 10 is moved to the location of user device 10', which shows the connection to the first access point AP1 provides better communication quality for the user device 10.

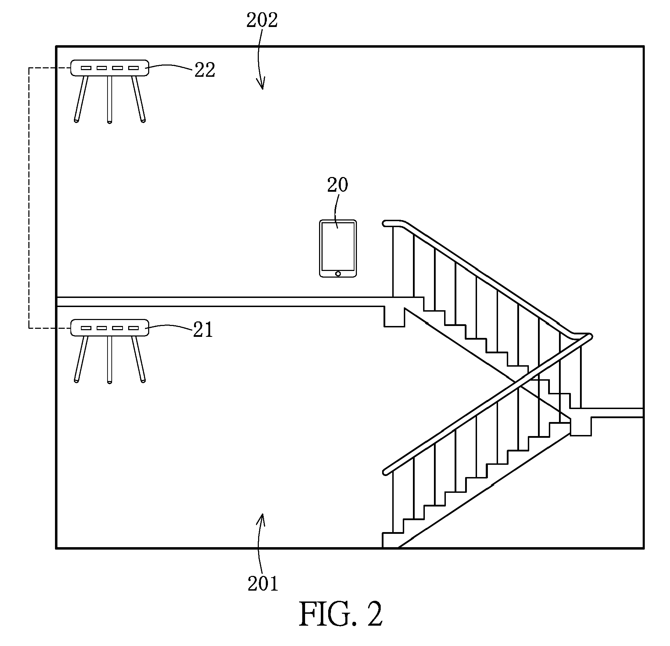

Fig. 2 shows a circumstance using the method for guiding the user device to establish connection among access points.

The diagram shows a space of a house having an upper floor and a lower floor. A first access point 21 is installed in a first floor 201 of the space. A second access point 22 is in a second floor 202 of the space. The first access point 21 and the second access point 22 constitute a wireless local area network. In the present example, the first access point 21 or the second access point 22 acts as a master access point. The present invention provides a solution that allows the user device 20 to change its connection to a next access point rather than the original one.

In the present example, the user device 20 is originally positioned in the second floor 202 of the space, and connected to an external network by the second access point 22. In the process of the movement, the communication quality between the user device 20 and the second access point 22 is changed. It is noted that the distance and the building structure between the floors result in an impediment to communication when the user device 20 is moved to the first floor 201. The master access point can judge whether or not another access point takes over the connection when the user device 20 has lost its connection. The connection is lost when the communication quality is lower than a specific threshold. Therefore, the master access point determines whether another access point has taken over the connection depending on whether or not a connection has been made by the first access point 21.

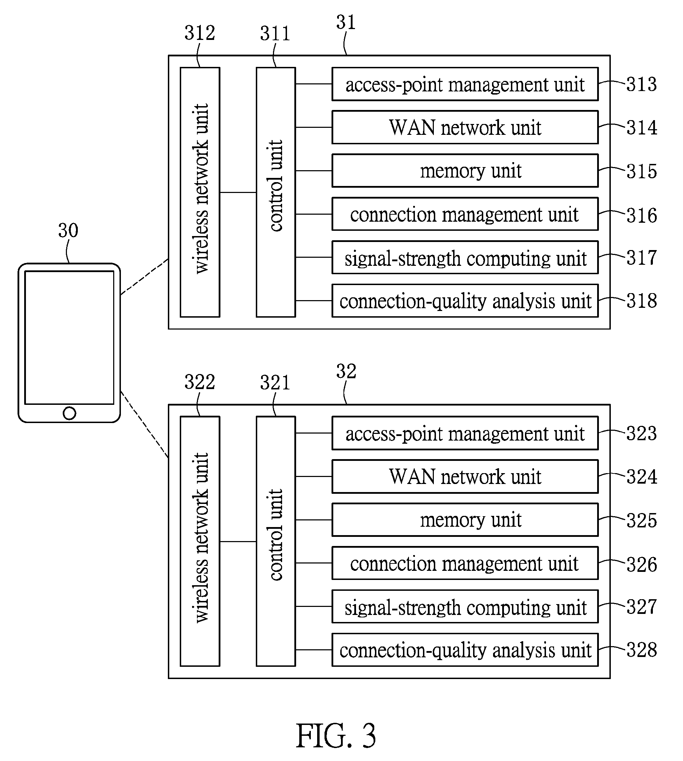

According to one of the embodiments of the present invention, the system for guiding a user device to establish connection among the access points can be adapted to the master access point in a local area network. The circuits of the master access point are described in the diagram shown in Fig. 3.

In one embodiment, the master access point is one of the access points in the local area network. The access points have similar circuit design. Fig. 3 shows two access points (31, 32) with similar circuit units, but different roles. However, the master access point may include different circuits from the normal access point.

In the present example, both the first access point 31 and the second access point 32 have control units 311, 321 used to control operations of the whole system in the device, and also to judge the hand-off process. The other circuit units of the access point are electrically connected with the control units 311, 321. The wireless network units 312, 322 are used to establish connection with the user device 30 under a specific communication protocol, e.g. WiFi™. The access-point management units 313, 323 can be implemented by circuits or firmware that are used to manage the access points in the LAN when it acts as a master access point. The access-point management unit is also used to acquire the signal status of the user device 30 among the access points; and/or acquire the network status of every signal status in the LAN. The memory units 315, 325 are used to store the data collected by the access-point management units 313, 323.

Furthermore, the access-point management unit (313, 323) in the master access point acquires the signal status of the nodes in the LAN reported by the access point. The signal status is such as received signal strength indication (RSSI) and bit error rate. The access-point management unit (313, 323) also acquires the network status relating to the external connection for the access point. The network status can be bandwidth information, including any latency of packets from a source to a destination. The latency of the time spent delivering the packets from the source to the destination will affect throughput of a transmission media.

Both the access points 31, 32 include WAN network units 314, 324 used to connect to WAN. The signal-strength computing units 317, 327 compute the signal strengths between the access point and the user device 30. The connection-quality analysis units 318, 328 are used to conduct a comprehensive judgment of communication quality based on the signal status between the access points 31, 32 and the user device 30 and/or the network status for every access point. The communication quality is provided for the control unit (311, 321) of the master access point to judge if it is necessary to switch the connection.

The connection management units 316, 326 for both access points 31, 32 receive control instructions from control units 311, 321 respectively, so as to define connection status of the user device 30. For example, the connection status for each access point indicates a status of disconnection with the user device 30, or good connection with the user device 30. When the master access point acquires the signal status from every access point and the user device 30, and/or the network status for every access point, a comprehensive judgment of communication quality can be performed. The communication quality indicative of the access point's signaling coverage covering the user device 30 can be incorporated for the master access point to assess whether or not to switch the connection to another access point. The judgment determines if the communication quality between the access point, e.g. first access point 31, and the user device 30 is lower than a specific threshold; and if the communication quality between the access point, e.g. second access point 32, and the user device 30 qualifies for the hand-off process.

The master access point can decide the timing to process the hand-off based on the information relating to communication quality. In the comprehensive judgment of the communication quality made by the master access point, the signal status between the user device 30 and every access point (31, 32) can be assessed individually; further the network status for every assess point (31, 32) to another network domain may also be found in the comprehensive judgment. It is noted that the signal status is such as the received signal strength and/or bit error rate; and the network status indicates the bandwidth for every AP to Internet. In an exemplary example, the signal status and the network status can be referred to in proportion to make the comprehensive judgment. For example, a weight proportion can be introduced to in combination of the signal status and the network status for every AP, so as to assess if the connection for the user device 30 should be switched to another access point.

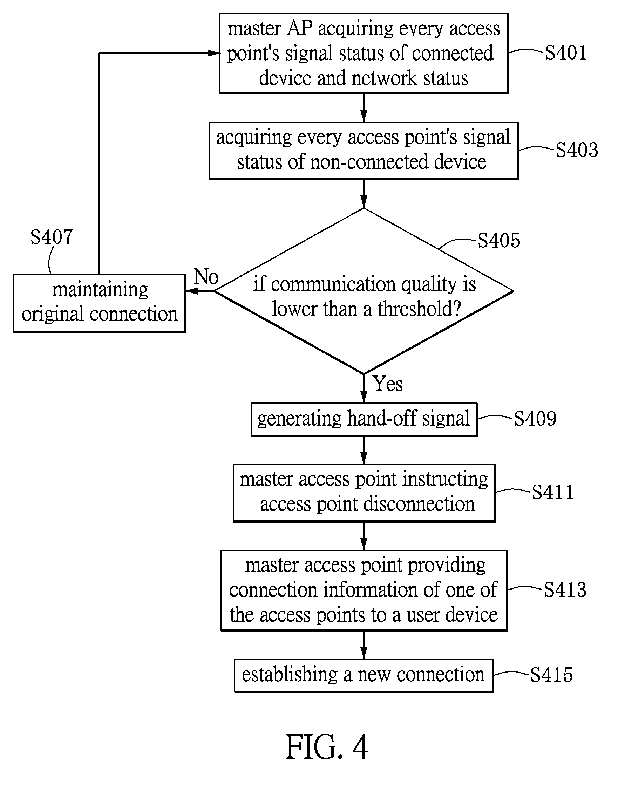

Fig. 4 shows a flow chart depicting the method for guiding the user device to establish a connection among the access points. The method is particularly applicable to a local area network including at least two access points.

In the beginning of the operation, such as in step S401, a master access point of the local area network acquires signal status between every access point and its connected device, and network status for every access point. The connected device is such as the user device that is connected to one of the access points. The master access point may first acknowledge the device that is connected to one of the access points in the LAN. The mentioned signal status and the network status can be acquired from the master access point. In an exemplary example, a list can be created in every access point, and the list records the relationship between the access point and any terminal device within its signal coverage. The master access point is able to check if any specified user device is in the list in every access point's memory. The information retrieved from the list can be accessed to assess if the user device is handed-off to another access point. For example, the system will continuously watch the communication quality between the user device and a first access point. The communication quality for every connection is one factor to assess if it is to be handed-off to a next connection.

In step S403, the master access point simultaneously acquires the signal status between every access point and any disconnected terminal device. The signal status for the access point to the disconnected terminal device acts as an important factor to judge if the next access point takes over the connection.

When the master access point acquires the signal status and network status for every access point in the LAN, the comprehensive judgment of communication quality can be made as a weight proportion there-between for assessing if the original connection is to be switched to another one.

In step S405, the master access point judges whether or not the outcome of communication quality is lower than a threshold. In an exemplary example, the master access point conducts the comprehensive judgment based on a proportional relationship of the signal strength (dBm), bit error rate (bit(error)/bit(total)), and bandwidth (bit/sec) for every access point to an external network. If the communication quality is larger than or equal to the threshold, the original connection is maintained, such as in step S407. Then the process goes to step S401 for continuously acquiring the communication quality.

If the communication quality is lower the threshold, the master access point generates a hand-off signal, such as in step S409. The access point can receive instruction from the master access point through the control circuit of the master access point and a connection management unit used to manage operation for every access point. In step S411, the master access point instructs the previous access point to disconnect the user device. In step S413, the master access point selects a next access point, e.g. second access point, based on the communication quality. The selected access point then initiates a new connection with the user device, such as in step S415.

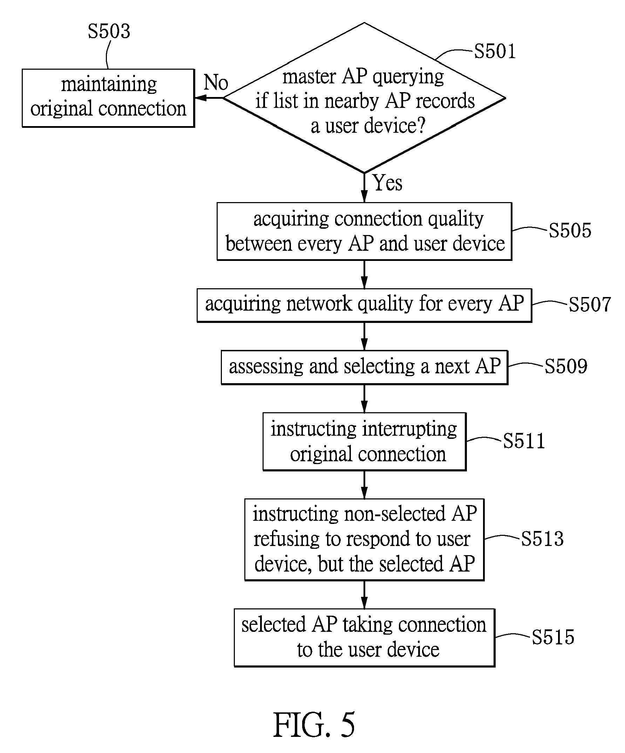

Reference is next made to Fig. 5 showing another flow chart depicting the method in one further embodiment of the present invention. When the system is in operation, a master access point can be determined among the access points in the local area network. The master access point can acquire connection information between every access point and the nodes in the LAN. The connection information allows the master access point to create a table that conveys the communication quality.

In the beginning step S501, the master access point sends the request to the access point for checking if the user device is in the table of the access point. The master access point also acquires the signal strength between the user device in the list and the access point, and the signal strength for every access point denotes connectivity with its connected device. If there is no table in the access point other than the original access point found to have the user device, it denotes that there is not any qualified access point to take the connection with the user device, such as in step S503. The original connection is therefore maintained.

If the master access point finds out a table in one or more access point has the user device, it means the packets of the user device have reached the access point(s). In step S505, the master access point obtains the signal information between the access point(s) and the user device, and the network status for the access point(s) can be evaluated, such as in step S507. The signal information and the network status act as references to assess the next access point, such as in step S509.

The next access point can be selected after the master access point comprehensively assesses communication quality for the access point(s) of interest. In step S511, the master access point instructs the previous access point to disconnect the user device. In step S513, the master access point also instructs the access point(s) other than the next access point to refuse to respond to the connection request issued by the user device. It is noted that the user device starts to broadcast connection requests to the access points in the LAN when it is disconnected from the original connection. Through this mechanism, the user device will be rejected by access point(s) other than the next access point selected by the master. In step S515, the selected access point takes over the connection with the user device. The invention allows the user device to establish a new connection successfully in the hand-off process within a shortest time.

The above-mentioned embodiments are applied to a local area network including at least two access points, in which, a master access point should be determined among the access points. The master access point governs the connection operations among the access points. This mechanism keeps the user device from freely establishing a connection with the access point. The master access point can efficiently instruct the next access point to take over the connection and simultaneously make the original access point to disconnect the original connection. Fig. 6 shows a flow chart depicting the process to determine the master access point in one embodiment of the present invention.

Fig. 6 shows one of the schemes to determine a master access point in a LAN. It is noted that the method for guiding the user device to establish a connection in the LAN in accordance with the present invention is not limited to the described scheme.

In one scheme, for example, an administrator of the LAN may himself determine one of the access points acting as the role of master access point. In one other scheme, the loading of network bandwidth can be one factor to determine the master access point. Still further, the access point with the best hardware specification among the access points in the LAN may be selected to act as the master access point.

When the network system is in operation, in step S601, the information relating to hardware and software of every access point can be exchanged among the access points. A common communication protocol can be applied among the access points. The common communication protocol allows the access points to exchange information with each other. Then the system can determine if, according to the exchanged information, any access point conducting a DHCP (Dynamic Host Configuration Protocol) service is found in the LAN, such as in step S603. If merely one of the access points in the LAN runs the DHCP service, this access point is configured to be the master access point, such as in step S605. The master access point is then in operation, such as in step S607, and starts to report its information to the other access points. The master access point in this scheme will operate the DHCP, collect information from every access point, operate the hand-off process, and process the topology variation, such as in step S609.

On the contrary, if there is not just one DHCP service in the LAN, the system can still determine the master access point based on other factors, such as in step S611, where the hardware addresses, and system loadings can be used to be the factors to determine the master access point when the factors are compared among the access points. In step S613, the master access point can be therefore determined, and then perform the steps as in step S607 and step S609.

Thus, according to the above-mentioned embodiments of the present invention, for the purpose of allowing the terminal device to roam among multiple access points, the system can actively guide the user device to establish the connection timely among the access points based on the connection quality. In the hand-off process, when the master access point actively configures the connectivity between the user device and a suitable access point based on the objective communication quality, the user device can smoothly move around the LAN without any annoying interruption. In an example, a weight proportion between the signal status and network status is particularly introduced to judge the connectivity, so as to assess the next connection for the roaming user device.

It is intended that the specification and depicted embodiment be considered exemplary only, with a true scope of the invention being determined by the broad meaning of the following claims.

## Claims

1. A method for guiding a user device (10) to establish connection among access points in a local area network, adapted to a wireless local area network having at least two access points (AP1, AP2, AP3), wherein one of the at least two access points (AP1, AP2, AP3) acts as a master access point, comprising:
in the local area network the master access point acquiring signal status between every access point and a user device (10), and/or network status of every access point; wherein the user device (10) is connected with a first access point (21) in the local area network;
the master access point conducting a comprehensive judgment of communication quality for every access point according to signal status between every access point and the user device (10), and/or network status of every access point; and
assessing if connection of the user device (10) is to be switched to another access point according to communication quality of every access point.

2. The method as recited in claim 1, wherein, in the step of comprehensive judgment of the communication quality, the signal status between every access point and the user device (10) is combined with the network status of every access point in a weight proportion, so as to assess if the connection of the user device (10) is to be switched to another access point.

3. The method as recited in claim 2, wherein, when the communication quality is not lower than a threshold, an original connection between the user device (10) and the first access point (21) is maintained; when the communication quality is lower than the threshold, the master access point selects a second access point (22) to take a new connection with the user device (10).

4. The method as recited in claim 3, wherein, the master access point instructs the second access point (22) to connect with the user device (10), and instructs the first access point (21) to interrupt the original connection with the user device (10); further instructs the other access points other than the second access point (22) to refuse responding to any connection request made by the user device (10).

5. The method as recited in any of claims 1 to 4, wherein the signal status between every access point and the user device (10) includes a received signal strength and a bit error rate; the network status of every access point includes a bandwidth.

6. The method as recited in claim 5, wherein, in the step of the master access point acquiring the signal status and the network status, the master access point further queries if a list in every access point has recorded the user device (10) for the purpose of accessing a next access point; wherein, if there is not a user device (10) on any list in every access point in the local area network, the original connection between the user device (10) and the first access point (21) is maintained.

7. A system for guiding a user device (10) to establish connection among access points in a local area network, adapted to a master access point in a wireless local area network, wherein the local area network includes at least two access points (AP1, AP2, AP3), the master access point performs a hand-off process as in the steps of:
acquiring a signal status of every access point and a user device (10) in the local area network, and/or a network status of every access point; wherein the user device (10) is connected with a first access point (21) in the wireless local area network;
according to the signal status between every access point and the user device (10), and/or the network status of every access point, conducting a comprehensive judgment of a communication quality; and
according to the communication quality of every access point, assessing if the connection of the user device (10) is to be switched to another access point.

8. The system as recited in claim 7, wherein the master access point is selected from one of the at least two access points (AP1, AP2, AP3) in the wireless local area network, the master access point comprising:
a control unit (311);
a wireless network unit (312), electrically connected with the control unit (311), used to establish connection with the user device (10);
an access-point management unit (313), electrically connected with the control unit (311), used to manage every access point in the wireless local area network, and acquire signal status of every access point and the user device (10), and/or network status of every access point;
a memory unit (315), electrically connected with the control unit (311), used to store information acquired by the access-point management unit (313);
a WAN network unit (314), electrically connected with the control unit (311), used to connect to an external network;
a connection management unit (316), electrically connected with the control unit (311), used to receive control instruction generated by the control unit (311), so as to determine a connection status of the user device (10), wherein the connection status indicates disconnection or connection with the user device (10);
a signal-strength computing unit (317), electrically connected with the control unit (311), used to compute signal strength between every access point and the user device (10); and
a connection-quality analysis unit (318), electrically connected with the control unit (311), used to conduct a comprehensive judgment of a communication quality according to the signal status and/or the network status.

9. The system as recited in claim 8, wherein, when the comprehensive judgment of the communication quality is performed, the signal status between every access point and the user device (10) is combined with the network status of every access point in a weight proportion, so as to assess if the connection of the user device (10) is to be switched to another access point.

10. The system as recited in any of claims 7 to 9, wherein the signal status between every access point and the user device (10) includes a received signal strength and a bit error rate; the network status of every access point includes a bandwidth.
